# EUROPEAN PATENT SPECIFICATION

(11) **EP 3 051 015 B1**
(45) Date of publication and mention of the grant of the patent: **12.09.2018**
(21) Application number: 16153366.6
(22) Date of filing: 29.01.2016
(51) Int. Cl.: D06F 33/02

(54) **WASHING MACHINE**
WASCHMASCHINE
MACHINE À LAVER

(30) Priority: 30.01.2015 KR 20150015241
(43) Date of publication of application: 03.08.2016
(73) Proprietor: LG Electronics Inc., Seoul 07336 (KR)
(72) Inventor: BAE, Suncheol, 08592 Seoul (KR)
(74) Representative: Vossius & Partner Patentanwälte Rechtsanwälte mbB

(56) References cited:
- GB-A- 2 316 954
- GB-A- 2 320 587
- US-A- 5 634 227
- US-A1- 2012 012 135
- US-A1- 2012 084 995

## Description

The present invention relates to a washing machine.

In general, a washing machine is an apparatus which washes laundry, such as clothes or bedclothes, using the emulsification action of detergent, a water current generated by a washing tub or a pulsator, or mechanical power of the pulsator.

Such a washing machine sequentially performs a wash in which a detergent is supplied to remove contaminants from laundry, a rinse in which the detergent is removed from the laundry, and a spin-dry in which water is removed from the laundry by rotating a washing tub containing the laundry at a high speed.

Conventionally, when driving of the washing machine is started according to various setting items input by a user through a control panel, an amount of laundry put into the washing tub (hereinafter, referred to as a "laundry amount") is sensed, a proper laundry treatment operation is set according to the sensed laundry amount, and an execution time of the laundry treatment operation is set. In the conventional washing machine, when the laundry treatment operation is set according to the laundry amount, it is difficult for a user to arbitrarily adjust the execution time of the laundry treatment operation.

GB 2 320 587 A discloses a method according to the preamble of claim 1.

An object of the present invention is to provide a washing machine in which a laundry treatment operation including a wash, a rinse and a spin-dry is terminated within a time set by a user.

Another object of the present invention is to provide a washing machine in which various properties necessary to execute a laundry treatment operation are automatically adjusted according to a time input by a user.

The objects of the present invention are achieved with the features of the claims.

To achieve the above objects, there is provided a method of operating a washing machine to execute a laundry treatment operation including a wash to remove contaminant from laundry by applying detergent to the laundry, a rinse to remove the detergent from the laundry, and a spin-dry to remove water from the laundry by rotating a washing tub containing the laundry at a high speed, wherein the method comprises: setting an operation time according to an input through a time setting unit by a user; and controlling, by a controller, the laundry treatment operation so as to be terminated before expiration of the operating time by adjusting an execution time of the spin-dry, according to the operation time set through the time setting unit, wherein the adjusting the execution time includes adjusting a gradient of acceleration of the washing tub during the spin-dry according to the operation time, wherein the method further comprises setting a contamination degree according to an input through a contamination degree setting unit by a user; and setting, by the controller, a range of a time, inputtable through the time setting unit, according to the contamination degree set through the contamination degree setting unit.

The method may further comprise: setting an amount of the laundry according to an input through a laundry amount setting unit by a user; and setting, by the controller, a range of a time, inputtable through the time setting unit, according to the amount of the laundry set through the laundry amount setting unit.

The method may further comprise: setting the range of the time includes increasing lower and upper limits of the inputtable time, as the amount of the laundry set through the laundry amount setting unit increases.

The method may further comprise: setting the range of the time includes increasing lower and upper limits of the inputtable time, as the contamination degree set through the contamination degree setting unit increases.

The method may further comprise: setting a water supply level according to an input through a water level setting unit by a user; and setting, by the controller, a range of a time, inputtable through the time setting unit, according to the water supply level set through the water level setting unit.

The method may further comprise: setting the range of the time includes increasing lower and upper limits of the inputtable time, as the water supply level set through the water level setting unit increases.

The above and other objects, features and other advantages of the present invention will be more clearly understood from the following detailed description taken in conjunction with the accompanying drawings, in which:
FIG. 1 is a cross-sectional view of a washing machine in accordance with one embodiment of the present invention;
FIGs. 2 and 3 are block diagrams illustrating control relations among main elements of the washing machine shown in FIG. 1; and
FIG. 4 is a view illustrating a control panel in accordance with one embodiment of the present invention.

The advantages and features of the present invention, and the way of attaining the same, will become apparent with reference to embodiments described below in conjunction with the accompanying drawings. Reference will now be made in detail to the preferred embodiments of the present invention, examples of which are illustrated in the accompanying drawings. Wherever possible, the same reference numbers will be used throughout the drawings to refer to the same or like parts.

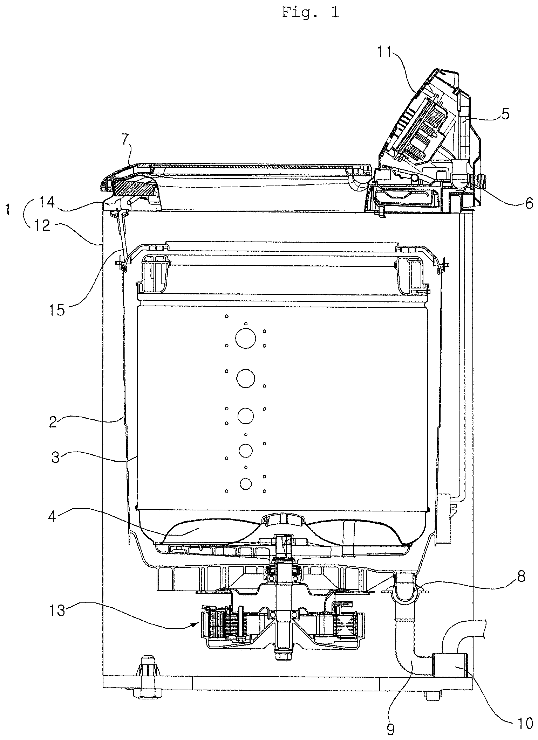

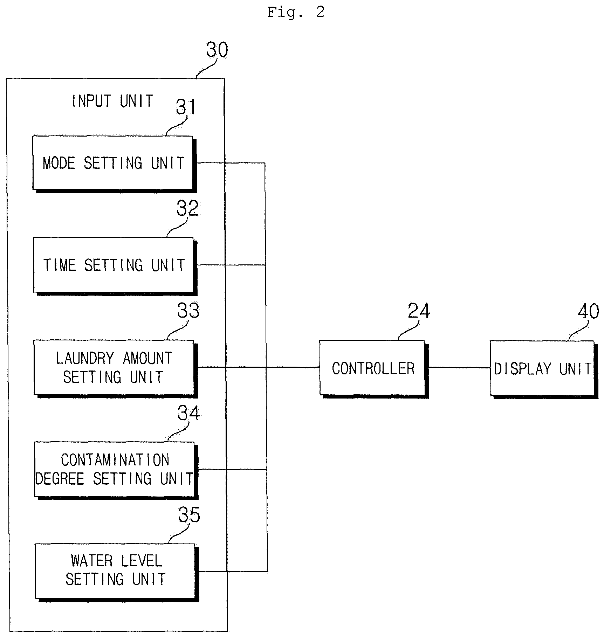

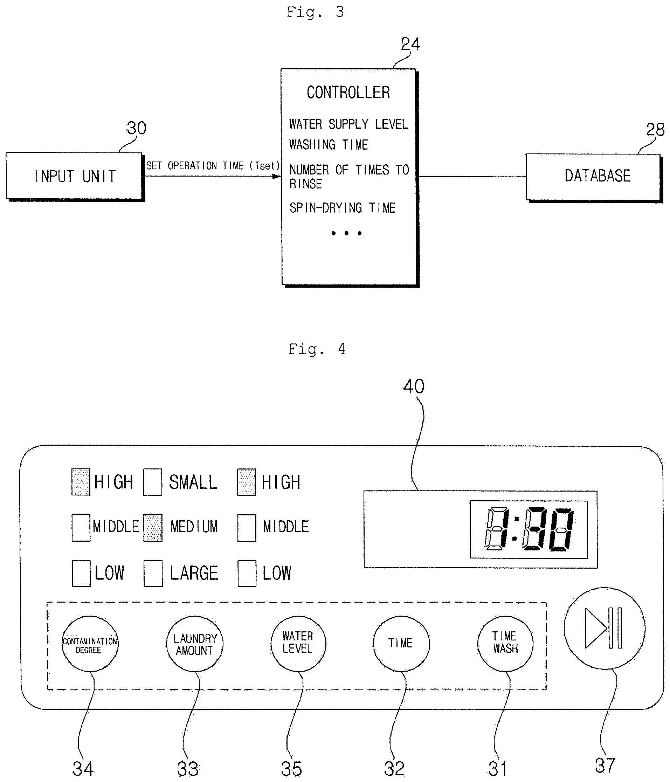

FIG. 1 is a cross-sectional view of a washing machine in accordance with one embodiment of the present invention. FIGs. 2 and 3 are block diagrams illustrating control relations among main elements of the washing machine shown in FIG. 1. FIG. 4 is a view illustrating a control panel in accordance with one embodiment of the present invention.

A washing machine in accordance with one embodiment of the present invention may execute a laundry treatment operation including a wash in which a detergent is applied to the laundry such that contaminants is removed from laundry, a rinse in which the detergent is removed from the laundry, and a spin-dry in which water is removed from the laundry by rotating a washing tub containing the laundry at a high speed. The laundry treatment operation may be executed based on various setting items input through an input unit 30, which will be described later. Hereinafter, a time from when the laundry treatment operation is initiated till when the laundry treatment operation is terminated will be referred to as an operation time.

With reference to FIGs. 1 and 2, the washing machine in accordance with one embodiment of the present invention may include a casing 1 forming the external appearance of the washing machine and a control panel 11 disposed on the casing 1. The control panel 11 may include the input unit 30 to receive various control commands from a user and a display unit 40 to display information regarding the operating state of the washing machine. A door 7 to open or close an opening (not shown) through which laundry enters may be provided on the casing 1 so as to be pivotable about the casing 1.

An outer tub 2 to contain washing water may be suspended within the casing 1 by a support rod 15 and a washing tub 3 to receive laundry may be provided within the outer tub 2 so as to be rotatable about a vertical axis. A pulsator 4 is provided on the bottom of the washing tub 3 so as to be rotatable and a plurality of holes to pass washing water is formed through the washing tub 3.

The casing 1 may include a cabinet 12 with an opened upper surface, and a top cover 14 provided at the opened upper surface. The top cover 14 has an opening formed at the center thereof so that laundry may be put into the washing tub 2 through the opening.

The support rod 15 is extended in the longitudinal direction, one end of the support rod 15 is connected to the casing 1 and a suspension (not shown) to elastically support the outer tub 2 is provided at the other end of the support rod 15. One end of the support rod 15 may be connected to any one of the cabinet 12 and the top cover 14, and the cabinet 12 or the top cover 14 may include a connection unit (not shown) to which the support rod 15 is pivotally connected.

A supply water flow path 5 is connected to an external water source, such as a faucet, and guides water to the inside of the outer tub 2 and/or the washing tub 3. A water supply valve 6 to control a water flow may be provided on the water supply path 5. A detergent box 16 to receive detergent may be provided on the top cover 14. When water is supplied to perform wash, washing water guided along the water supply path 5 may be input to the inside of the washing tub 3 via the detergent box 16.

A drain path 9 serves to drain washing water within the outer tub 2. A drain valve 8 serves to control a water flow through the drain path 9 and a drain pump 10 serves to discharge washing water in the drain path 9 to the outside of the washing machine. A drive unit 13 rotates the washing tub 3 and/or the pulsator 4. The drive unit 13 may include a rotating motor and a clutch to transmit rotating force of the motor selectively to the washing tub 3 or the pulsator 4. The washing tub 3 and the pulsator 4 may be integrally rotated or the pulsator 4 alone may be rotated in the stopped state of the washing tub 3 by the switch operation of the clutch.

With reference to FIG. 2, the input unit 30 may include a mode setting unit 31, a time setting unit 32, a laundry amount setting unit 33, a contamination degree setting unit 34 and/or a water level setting unit 35. Various setting items input through these respective elements may be input to the controller 24 through electrical signals, and the controller 24 may electrically control various elements forming the washing machine according to the input setting items.

A user sets an operation time through the time setting unit 32. The controller 24 may adjust at least one of a level of water to be supplied to the inside of the washing tub 3 (hereinafter, referred to as a "water supply level") so as to execute at least one of wash and rinse, a number of times to perform wash or rinse and an execution time (Ts) of the spin-dry and, according to the operation time (Tset; hereinafter, referred to as a "set operation time") set through the time setting unit 32 and thus control the laundry treatment operation to be terminated before the set operation time (Tset) expires. Such control carried by the controller 24 is performed, when the user selects a specific mode (hereinafter, referred to as a "time wash mode") through the mode setting unit 31.

The user may set the amount of laundry (hereinafter, referred to as a "laundry amount") through the laundry amount setting unit 33. The set laundry amount may be displayed through the display unit 40 or indicator lights provided on the control panel 11 (with reference to FIG. 4).

The controller 24 may set a range of time, which may be input through the time setting unit 32, according to the laundry amount set through the laundry amount setting unit 33. For example, Table 1 below exemplarily states, if "small amount", "medium amount" or "large amount" may be set as the laundry amount through the laundry amount setting unit 33, ranges of time which may be set so as to correspond to the respective laundry amounts.

**[Table 1]**

| Laundry Amount | Operation time (Tset) which may be input |
|---|---|
| Small | 20∼40 mins. |
| Medium | 50∼80 mins. |
| Large | 90∼120 mins. |

As known from Table 1, the controller 24 may set a range of time, which may be input through the time setting unit 32, according to the laundry amount set through the laundry amount setting unit 33. Particularly, as the laundry amount set through the laundry amount setting unit 32 increases, the controller 24 may increase the upper and lower limits of the range of time, which may be input through the time setting unit 32. For example, in Table 1, if "medium amount" is set as the laundry amount, an operation time between 50 mins. (the lower limit) and 80 mins. (the upper limit) may be input and, if "large amount" is set as the laundry amount, an operation time between 90 mins. (the lower limit) and 120 mins. (the upper limit) may be input, i.e., the operation time for the large amount may be increased, as compared to the operation time for the small amount or the medium amount.

The controller 24 may control the display unit 40 so as to display an operation time which may be set at present and, whenever the time setting unit 32 is selected, the time displayed through the display unit 40 may be varied. For example, if "large amount" is selected as the laundry amount, the display unit 40 displays the lower limit (90 mins., 1:30) of the time which may be selected as an initial value and, whenever the time setting unit 32 is selected, the time increases by 10 mins. Then, after the time reaches the upper limit (120 mins., 2:00), the time may return to the initial value. When the user confirms the time through the display unit 40 and then selects a specific key (for example, an operation/stop key 37) provided through the input unit 30, the time displayed on the display unit 40 is set as an operation time and the laundry treatment operation is executed so as to be completed within the set operation time (Tset) under the control of the controller 24.

The user sets the contamination degree of laundry through the contamination degree setting unit 34. The contamination degree set through the contamination degree setting unit 34 may be displayed through the display unit 40 or indicator lights provided on the control panel 11 (FIG. 4 exemplarily illustrates display of three contamination degrees including "high", "middle" and "low").

The controller 24 sets a range of time, which is input through the time setting unit 32, according to the contamination degree set through the contamination degree setting unit 34. Particularly, as the contamination degree set through the contamination degree setting unit 34 increases, the controller 24 may increase the upper and lower limits of the range of time which may be input through the time setting unit 32.

Table 2 below exemplarily states, if "high", "middle" or "low" may be set as the contamination degree through the contamination degree setting unit 34, ranges of time which may be set so as to correspond to the respective contamination degrees.

**[Table 2]**

| Contamination degree | Operation time (Tset) which may be input |
|---|---|
| High | 20∼40 mins. |
| Middle | 50∼80 mins. |
| Low | 90∼120 mins. |

In the same manner as the above description with reference to Table 1, the controller 24 may control the display unit 40 so as to display an operation time which may be set at present and, whenever the time setting unit 32 is selected, the time displayed through the display unit 40 may be varied. When a specific key (for example, the operation/stop key 37) provided through the input unit 30 is selected, the time displayed on the display unit 40 is set as an operation time and the laundry treatment operation is executed so as to be completed within the set operation time (Tset) under the control of the controller 24.

The user may set a water supply level through the water level setting unit 35. The water supply level set through the water level setting unit 35 may be displayed through the display unit 40 or indicator lights provided on the control panel 11 (with reference to FIG. 4).

The controller 24 may set a range of time, which may input through the time setting unit 32, according to the water supply level set through the water level setting unit 35. Particularly, as the water supply level set through the water level setting unit 35 increases, the controller 24 may increase the upper and lower limits of the range of time which may be input through the time setting unit 32.

Table 3 below exemplarily states, if "high", "middle" or "low" may be set as the water supply level through the water level setting unit 35, ranges of time which may be set so as to correspond to the respective water levels.

**[Table 3]**

| Water supply level | Operation time (Tset) which may be input |
|---|---|
| Low | 20∼40 mins. |
| Middle | 50∼80 mins. |
| High | 90∼120 mins. |

In the same manner as the above description with reference to Table 1, the controller 24 may control the display unit 40 so as to display an operation time which may be set at present and, whenever the time setting unit 32 is selected, the time displayed through the display unit 40 may be varied. When a specific key (for example, the operation/stop key 37) provided through the input unit 30 is selected, the time displayed on the display unit 40 is set as an operation time and the laundry treatment operation is executed so as to be completed within the set operation time (Tset) under the control of the controller 24.

Hereinafter, if the operation time is set as described above, setting or changing of the detailed configurations of laundry treatment operation according to the set operation time (Tset) will be described.

The controller 24 may adjust a washing time according to the set operation time (Tset). Washing may include rotations of the pulsator 4 or the washing tub 3 according to various predetermined patterns, and the controller 24 may adjust the execution time of each rotation according to the set operation time (Tset). Particularly, as the set operation time (Tset) decreases, the washing time may be set to decrease.

The controller 24 may adjust the gradient of acceleration of the washing tub 3 according to the set operation time (Tset) during the spin-dry. In the spin-dry, the washing tub 3 is accelerated up to a predetermined spin-drying rotation speed and then rotated for a designated time while maintaining the spin-drying rotation speed. Here, the gradient of acceleration of the washing tub 3 up to the spin-drying rotation speed (hereinafter, referred to as a "gradient of acceleration") may be adjusted according to the set operation time (Tset). By varying the gradient of acceleration, a time taken for the washing tub 3 to reach the spin-drying rotation speed may be adjusted and, thus, the overall laundry treatment operation may be terminated within the set operation time (Tset). Particularly, the controller 24 may set the gradient of acceleration to have a greater value, as the set operation time (Tset) decreases. That is, the controller 24 shortens a time taken for the washing tub 3 to be accelerated up to the spin-drying rotation speed, as the set operation time (Tset) decreases.

The controller 24 may adjust a rotation speed which the washing tub 3 maintains during the spin-dry (i.e., the spin-drying rotation speed) according to the set operation time (Tset). Particularly, as the set operation time (Tset) decreases, the controller 24 may increase the spin-drying rotation speed and, thus, laundry may be rapidly spin-dried.

The controller 24 may adjust a time for which the washing tub 3 is rotated while maintaining the spin-drying rotation speed (hereinafter, referred to as a "maintenance time") during the spin-dry. Particularly, the maintenance time may decrease, as the set operation time (Tset) decreases.

The washing machine may include a water level sensor (not shown) to sense a water level within the outer tub 2. In this case, the controller 24 sets a water supply level according to the operation time set through the time setting unit 32 and opens the water supply valve 6 so as to supply water for the wash or rinse. While water supply is carried out, the water sensor may continue to sense the water level and, upon judging that the sensed water level reaches a set water supply level, the controller 24 may close the water supply valve 6. The controller 24 may set the water supply level to be lower, as the set operation time (Tset) decreases. The reason for this is to reduce a time taken to perform water supply. Such a method of adjusting the water supply level according to the set operation time (Tset) may allow the water supply level to be re-adjusted according to the set operation time (Tset) even in the case in which the water supply level is automatically determined according to a laundry amount.

The controller 24 may adjust a number of times of execution of the rinse according to the set operation time (Tset). The number of times of execution of the rinse may decrease, as the set operation time (Tset) decreases.

As described above, it may be understood that, through adjustment of a water supply level, a washing time, the number of times of rinsing, a spin-drying time, etc. by the controller 24, values pre-stored in a database 28 are changed to other values according to a set operation time (Tset) and then the changed values are stored in the database 28.

As apparent from the above description, a washing machine in accordance with the present invention may terminate a laundry treatment operation within a time set by a user and increase user convenience. Further, by automatically adjusting various variables, the laundry treatment operation may be terminated within a time input by the user.

## Claims

1. A method of operating a washing machine to execute a laundry treatment operation including a wash to remove contaminant from laundry by applying detergent to the laundry, a rinse to remove the detergent from the laundry, and a spin-dry to remove water from the laundry by rotating a washing tub (3) containing the laundry at a high speed, wherein the method comprises:
setting an operation time according to an input through a time setting unit (32) by a user; and
controlling, by a controller (24), the laundry treatment operation so as to be terminated before expiration of the operating time by adjusting an execution time of the spin-dry, according to the operation time set through the time setting unit (32), the method **characterized by**:
the adjusting the execution time includes adjusting a gradient of acceleration of the washing tub (3) during the spin-dry according to the operation time,
wherein the method further comprises
setting a contamination degree according to an input through a contamination degree setting unit (34) by a user; and
setting, by the controller (24), a range of a time, inputtable through the time setting unit (32), according to the contamination degree set through the contamination degree setting unit (34).

2. The method of claim 1, further comprising setting an amount of the laundry according to an input through a laundry amount setting unit (33) by a user; and
setting, by the controller (24), a range of a time, inputtable through the time setting unit (32), according to the amount of the laundry set through the laundry amount setting unit (33).

3. The method of claim 2, wherein the setting the range of the time includes increasing lower and upper limits of the inputtable time, as the amount of the laundry set through the laundry amount setting unit (33) increases.

4. The method of claim 3, wherein the setting the range of the time includes increasing lower and upper limits of the inputtable time, as the contamination degree set through the contamination degree setting unit (34) increases.

5. The method of claim 1, further comprising setting a water supply level according to an input through a water level setting unit (35) by a user; and
setting, by the controller (24), a range of a time, inputtable through the time setting unit (32), according to the water supply level set through the water level setting unit (35).

6. The method of claim 5, wherein the setting the range of the time includes increasing lower and upper limits of the inputtable time, as the water supply level set through the water level setting unit (35) increases.

## Patentansprüche

1. Verfahren zum Betreiben einer Waschmaschine zur Durchführung einer Wäschebehandlung mit einem Waschgang, um Verunreinigungen von der Wäsche zu entfernen, indem der Wäsche Waschmittel zugefügt wird, einem Spülvorgang, um das Waschmittel aus der Wäsche zu entfernen, und einem Schleudervorgang, um Wasser aus der Wäsche zu entfernen, durch Hochgeschwindigkeitsdrehung eines die Wäsche enthaltenden Bottichs (3), wobei das Verfahren umfasst:
Festlegen einer Betriebszeit gemäß einer Benutzereingabe an einer Zeiteinstelleinheit (32); und
Steuern der Wäschebehandlung durch eine Steuerung (24), so dass sie vor Ablauf der Betriebszeit beendet ist, indem eine Ausführungszeit des Schleudervorgangs gemäß der durch die Zeiteinstelleinheit (32) eingestellten Betriebszeit angepasst wird,
wobei das Verfahren **dadurch gekennzeichnet ist, dass**:
die Anpassung der Ausführungszeit die Anpassung eines Beschleunigungsgradienten des Bottichs (3) während des Schleudervorgangs gemäß der Betriebszeit beinhaltet,
wobei das Verfahren ferner umfasst
Festlegen eines Verschmutzungsgrads gemäß einer Benutzereingabe über eine Verschmutzungsgradeinstelleinheit (34); und
Festlegen einer Zeitdauer durch die Steuerung (24), die über die Zeiteinstelleinheit (32) eingegeben werden kann, gemäß dem durch die Verschmutzungsgradeinstelleinheit (34) festgelegten Verschmutzungsgrad.

2. Verfahren nach Anspruch 1, ferner umfassend die Festlegung einer Wäschemenge gemäß einer Benutzereingabe über eine Wäschemengeneinstelleinheit (33); und Festlegen einer Zeitdauer durch die Steuerung (24), die über eine Zeiteinstelleinheit (32) eingegeben werden kann, gemäß der durch die Wäschemengeneinstelleinheit (33) festgelegten Wäschemenge.

3. Verfahren nach Anspruch 2, wobei das Festlegen der Zeitdauer die Erhöhung von Unter- und Obergrenzen der einzugebenden Zeit beinhaltet, wenn sich die durch die Wäschemengeneinstelleinheit (33) festgelegte Wäschemenge erhöht.

4. Verfahren nach Anspruch 3, wobei das Festlegen der Zeitdauer die Erhöhung von Unter- und Obergrenzen der einzugebenden Zeit beinhaltet, wenn sich der durch die Verschmutzungsgradeinstelleinheit (34) festgelegte Verschmutzungsgrad erhöht.

5. Verfahren nach Anspruch 1, ferner umfassend das Festlegen einer Wasserzuführmenge gemäß einer Benutzereingabe über eine Wassermengeneinstelleinheit (35); und Festlegen einer Zeitdauer durch die Steuerung (24), die über eine Zeiteinstelleinheit (32) eingegeben werden kann, gemäß der durch die Wassermengeneinstelleinheit (35) festgelegten Wasserzuführmenge.

6. Verfahren nach Anspruch 5, wobei das Festlegen der Zeitdauer die Erhöhung von Unter- und Obergrenzen der einzugebenden Zeit beinhaltet, wenn sich die durch die Wassermengeneinstelleinheit (35) festgelegte Wasserzuführmenge erhöht.

## Revendications

1. Procédé de fonctionnement d'une machine à laver pour l'exécution d'un processus de traitement de linge comprenant un lavage pour éliminer les agents contaminants du linge par application d'un détergent sur le linge, un rinçage pour éliminer le détergent du linge, et un essorage pour éliminer l'eau du linge par rotation à vitesse élevée d'une cuve de lavage (3) contenant le linge, ledit procédé comprenant :
le réglage d'un temps de fonctionnement en fonction d'une entrée sur une unité de réglage de temps (32) par un utilisateur ; et
la commande, par un dispositif de commande (24), du processus de traitement de linge de manière que celui-ci soit terminé avant l'écoulement du temps de fonctionnement,
par réglage d'un temps d'exécution de l'essorage, en fonction du temps de fonctionnement fixé par l'unité de réglage de temps (32),
ledit procédé étant **caractérisé** :
**en ce que** le réglage du temps d'exécution comprend le réglage d'un gradient d'accélération de la cuve de lavage (3) pendant l'essorage en fonction du temps de fonctionnement,
ledit procédé comprenant en outre le réglage d'un degré de contamination en fonction d'une entrée sur une unité de réglage de degré de contamination (34) par un utilisateur ; et
le réglage, par le dispositif de commande (24), d'une plage temporelle, pouvant être entrée sur l'unité de réglage de temps (32), en fonction du degré de contamination fixé par l'unité de réglage de degré de contamination (34).

2. Procédé selon la revendication 1, comprenant en outre le réglage d'une quantité de linge en fonction d'une entrée sur une unité de réglage de quantité de linge (33) par un utilisateur ; et
le réglage, par le dispositif de commande (24), d'une plage temporelle, pouvant être entrée sur l'unité de réglage de temps (32), en fonction de la quantité de linge fixée par l'unité de réglage de quantité de linge (33).

3. Procédé selon la revendication 2, où le réglage de la plage temporelle comprend l'élévation de la limite inférieure et de la limite supérieure du temps pouvant être entré, en fonction de l'augmentation de la quantité de linge fixée par l'unité de réglage de quantité de linge (33).

4. Procédé selon la revendication 3, où le réglage de la plage temporelle comprend l'élévation de la limite inférieure et de la limite supérieure du temps pouvant être entré, en fonction de l'élévation du degré de contamination fixé par l'unité de réglage de degré de contamination (34).

5. Procédé selon la revendication 1, comprenant en outre le réglage d'un niveau d'alimentation en eau en fonction d'une entrée sur une unité de réglage de niveau d'eau (35) par un utilisateur ; et
le réglage, par le dispositif de commande (24), d'une plage temporelle, pouvant être entrée sur l'unité de réglage de temps (32), en fonction du niveau d'alimentation en eau fixé par l'unité de réglage de niveau d'eau (35).

6. Procédé selon la revendication 5, où le réglage de la plage temporelle comprend l'élévation de la limite inférieure et de la limite supérieure du temps pouvant être entré, en fonction de l'élévation du niveau d'alimentation en eau fixé par l'unité de réglage de niveau d'eau (35).
